# EUROPÄISCHE PATENTSCHRIFT

(11) **EP 2 979 905 B1**
(45) Veröffentlichungstag und Bekanntmachung des Hinweises auf die Patenterteilung: **01.05.2019**
(21) Anmeldenummer: 15169542.6
(22) Anmeldetag: 28.05.2015
(51) Int. Cl.: B60C 15/06, B60C 15/024

(54) **FAHRZEUGLUFTREIFEN**
PNEUMATIC TYRES FOR A VEHICLE
PNEUMATIQUES DE VEHICULE

(30) Priorität: 31.07.2014 DE 102014215093
(43) Veröffentlichungstag der Anmeldung: 03.02.2016
(73) Patentinhaber: Continental Reifen Deutschland GmbH, 30165 Hannover (DE)
(72) Erfinder: Krishnamurthy, Kumar, 30173 Hannover (DE)
(74) Vertreter: Finger, Karsten

(56) Entgegenhaltungen:
- JP-A- 2008 155 728
- US-A1- 2011 000 597

## Beschreibung

Die Erfindung betrifft einen Fahrzeugluftreifen für Personenkraftwagen in Radialbauart mit einem Gürtelverband aus mehreren Gürtellagen, mit einer weitgehend luftundurchlässigen Innenschicht, mit einem profilierten Laufstreifen, mit Wulstbereichen aufweisend je mindestens einen Wulstkern, mit Seitenwänden aufweisend je mindestens einen Seitenwandstreifen und mit einer einlagigen Karkasse aufweisend textile Festigkeitsträger, welche innerhalb der Lage im Wesentlichen parallel zueinander angeordnet und in elastomerem Material eingebettet sind, wobei die Karkasse den Reifen von Wulstbereich zu Wulstbereich durchläuft, die Wulstbereiche von axial innen nach axial außen umschlingt und als Karkasshochschlag ausgeführt ist, wobei das Ende des Karkasshochschlages auf einer Höhe angeordnet ist, welche radial oberhalb des Wulstbereiches liegt, wobei die Höhe des Endes des Karkasshochschlages in einem ersten Höhenbereich von 18 mm bis 37 mm, bevorzugt von 20 mm bis 30 mm, angeordnet ist und dass die Höhe des radialen äußeren Endes des Wulstbereichs in einem zweiten Höhenbereich von 13 mm bis 21 mm, bevorzugt von 15 mm bis 18 mm, angeordnet ist, jeweils gemessen ab der Unterkante des Wulstkernes in radialer Richtung.

"Wulstbereich" meint Wulstkern sowie Kernreiter, soweit dieser letztgenannte angeordnet ist. Die "nominale Seitenwandhöhe" ist die Höhe des Reifens vom radial inneren Ende des Reifens im Wulstbereich nach radial außen bis zum radial äußeren Ende des Laufstreifens.

Ein Reifen der eingangs genannten Art ist beispielsweise aus der JP 2008 155 728 A bekannt. Der Karkasshochschlag der Karkasse endet radial oberhalb des Wulstbereiches in einer Höhe von höchstens 25 mm, gemessen ab der Unterkante des Wulstkernes in radialer Richtung.

Aus der US 2011 000 059 7 A1 ist ein Fahrzeugluftreifen mit Notlaufeigenschaften ("Runflat-Reifen") bekannt, welcher innenseitig ein die Seitenwand verstärkendes und an der Karkasse anliegendes Seitenwandinsert aufweist. Die Karkasse ist über den Großteil ihrer Erstreckung zweilagig ausgeführt, wobei die erste Lage um die Wulstkerne Karkasshochschläge bildend umgeschlagen ist. Die andere Lage der Karkasse verläuft radial außerhalb der ersten Lage und endet reifeninnseitig radial oberhalb der Wulstkerne.

PKW-Fahrzeugluftreifen, welche beispielsweise als Ultra High Performance (UHP) PKW-Reifen eingesetzt werden, sind dem Fachmann hinreichend bekannt. An diese Reifen werden besonders hohe Anforderungen bezüglich Fahreigenschaften gestellt werden. UHP PKW-Reifen zeichnen sich unter anderem dadurch aus, dass sie für Geschwindigkeiten bis etwa 360 km/h ausgelegt sind. Die Karkasse ist einlagig ausgeführt und ist mit ihrem Karkasshochschlag weit die Seitenwand hoch geführt, so dass das Ende des Karkasshochschlages bis unter die Gürtelkante reicht. Durch den die Seitenwand weit hochreichenden Karkasshochschlag ist die Seitenwand insbesondere in der stark auf Biegung beanspruchten sogenannten "Biegezone" in Bezug auf die Reifenhaltbarkeit versteift. Die Biegezone befindet sich etwa auf mittlerer bis oberer Seitenwandhöhe. Die Biegezone kann die Korbbögen beinhalten. Eine Biegung kann im Fahrbetrieb jedoch nicht zur Gänze vermieden werden. Bei starker Biegung, z.B. im Fall von Überlast oder von Unterdruck im auf der Felge montierten und aufgepumpten Reifen, erfährt die Seitenwand beispielsweise eine starke Kompression der weitgehend luftdicht ausgeführten Innenschicht. Dies kann zu einer Rissinitiierung in der Innenschicht führen, was sich negativ auf die Luftdichtigkeit des Reifens auswirkt. Beim Durchlauf der Bodenaufstandsfläche des Reifens erfährt der zum Karkasshochschlag axial innenliegende Karkasslagenbereich in der Biegezone einen Wechsel von Kompression und Spannung, welcher einen negativen Einfluss auf die Haltbarkeit der Festigkeitsträger der Karkasse ausübt.

Zudem ist der Reifen durch den weit die Seitenwand hochreichenden Karkasshochschlag im Gewicht hoch und in Bezug auf den Materialeinsatz teuer.

Es ist die Aufgabe der Erfindung, einen Fahrzeugluftreifen der eingangs genannten Art zur Verfügung zu stellen, der vergleichsweise kostengünstig zu fertigen ist, der vergleichsweise leicht an Gewicht ist und der in seiner Haltbarkeit und seinem Fahrverhalten verbessert ist.

Gelöst wird die gestellte Aufgabe erfindungsgemäß dadurch, dass der Fahrzeugluftreifen eine nominale Seitenwandhöhe von 115 mm oder weniger aufweist, wobei der Wulstbereich axial außerhalb der Karkasse genau zwei Bauteile - einen Wulststreifen und einen Seitenwandstreifen - aufweist, die aus elastomerem Material gebildet sind und jedes der Bauteile zumindest im Wulstbereich aus genau einer elastomeren Materialmischung gebildet ist, wobei der Seitenwandstreifen und der Wulststreifen in einer Grenzlinie aneinander angrenzen, wobei die Grenzlinie - im Reifenquerschnitt betrachtet -
- axial außen auf einer Höhe von 20 mm bis 30 mm, bevorzugt von 22 mm bis 28 mm, endet und
- axial innen auf einer Höhe von 0 mm bis 20 mm, bevorzugt von 12 mm bis 18 mm, endet,
- wobei die Höhen der axialen Enden gemessen sind ab der Unterkante des Wulstkernes in radialer Richtung.

Es ist ein PKW-Luftreifen mit einer nominalen Seitenwandhöhe von 115 mm oder weniger geschaffen, der einen vergleichsweise niedrigen Karkasshochschlag aufweist. Dieser reicht in radialer Richtung über den Wulstbereich (Wulstkern und, soweit ein Kernreiter angeordnet ist, auch Kernreiter) hinaus, endet aber kurz oberhalb des Wulstbereiches. Hierdurch ist sowohl an Karkassmaterial als auch an Reifengewicht eingespart.

Da der Karkasshochschlag bei einer vergleichsweise geringen Höhe endet, weist der Reifen im Bereich der Biegezone in axialer Richtung nur mehr eine Karkass-Verstärkungslage auf. Diese liegt im Bereich der neutralen Linie, welche die Linie angibt, auf der sich bei einer Biegung des Reifens, z.B. durch Einfederung, Kompression und Spannung aufheben. Weist der Bereich der Biegezone hingegen zwei Karkass-Verstärkungslagen auf, liegt maximal eine dieser Lagen - üblicherweise der Karkasshochschlag - im Bereich der neutralen Linie, wohingegen die andere Karkass-Verstärkungslage einem starken und schnellen Wechsel von Kompression und Spannung ausgesetzt ist. Durch den erfindungsgemäßen niedrigen Karkasshochschlag ist die Beanspruchung der Karkasse ist somit stark reduziert. Die Beanspruchung der Karkasse ist insbesondere hinsichtlich der Beanspruchung der Festigkeitsträger der Karkasse gegenüber dem Wechsel von Kompression und Spannung beim Durchlaufen der Bodenaufstandsfläche stark reduziert.

Beim erfindungsgemäßen Reifen ist auch der Abstand von Innenschicht zur neutralen Linie in der Biegezone verringert, wodurch auch die Beanspruchung der Innenschicht reduziert ist.

Die Steifigkeit im Bereich der Biegezone ist somit zwar verringert, aber die Auswirkungen von Biegungen sind stark reduziert. Hierdurch ist ein PKW-Reifen mit niedriger Seitenwandhöhe zur Verfügung gestellt, dessen Beanspruchung von Innenschicht und Karkasse im Fahrbetrieb, insbesondere beim Durchlaufen der Bodenaufstandsfläche, reduziert ist, wodurch die Haltbarkeit des Reifens verbessert ist.

Vorteilhaft ist weiter, dass die Konstruktion im Wulstbereich weitgehend unverändert ist, weshalb die laterale Steifigkeit im Wulstbereich weitgehend unverändert ist. Die Verringerung der Steifigkeit im mittleren bis oberen Seitenwandbereich führt zu einer größeren Bodenaufstandsfläche, insbesondere bei Einfederung, wodurch das Kurvenfahrverhalten verbessert ist. Hierdurch ist das Fahrverhalten verbessert und die hohen Anforderungen, die gerade an Reifen mit einer Seitenwandhöhe von 115 mm oder weniger bezüglich Fahrverhalten gestellt werden, sind noch besser erfüllbar. Dies gilt insbesondere bei einer Radlast von 500 N bis 4000 N.

Der Verlauf der Grenzlinie von axial innen oben nach axial außen unten wird als "Transitions-Linie" bezeichnet, während der erfindungsgemäße Verlauf der Grenzlinie von axial innen unten nach axial außen oben als "inverse Transitions-Linie" bezeichnet wird, welche besonders vorteilhaft für die Reifenhaltbarkeit und den Rollwiderstand ist.

Als besonders geeignet hat sich eine solche Konstruktion für PKW-Reifen mit einer Seitenwandhöhe 106 mm oder weniger, bevorzugt 100 mm oder weniger, herausgestellt.

Für PKW-Reifen mit einer Seitenwandhöhe von maximal 115 mm ist solch ein niedriger Karkasshochschlag bei einer Tragfähigkeitskennzahl von kleiner gleich 100 gemäß E.T.R.T.O. Standards Manual 2014. Aus der Tragfähigkeitskennzahl eines Reifens kann die maximal zulässige Höchstlast pro Reifen ermittelt werden.

In einer bevorzugten Ausführungsform besteht jeder Wulstbereich nur aus einem Wulstkern, wobei der Wulstkern vorzugsweise ein Hochkantkern mit einer radialen Erstreckung, die mindestens dreimal seine axiale Erstreckung beträgt, ist. Durch diese Konstruktion ist besonders in Bezug auf das Reifengewicht und die Entstehungskosten des Reifens eingespart.

Zweckmäßig ist es ebenso, wenn der Wulstbereich aus Wulstkern und Kernreiter besteht.

In einer anderen Ausführungsform der Erfindung weist das elastomere Material der Karkasse eine Shore-Härte (Shore-A) von 50 ShA bis 70 ShA, gemessen gemäß DIN ISO 7619-1:2012-02, einen Rückprallwert von 38 % bis 50 % bei Raumtemperatur nach DIN 53512, eine Zugfestigkeit von 10 MPa bis 18 MPa, gemessen gemäß DIN 53479, eine Bruchdehnung von 300 % bis 650 %, gemessen gemäß DIN 53479, sowie eine Anzahl an Zyklen bis zum ersten Riss oder zur Risspropagation von 2 kC bis 1600 kC, gemessen gemäß DIN ISO 132, auf. Eine solche Karkasse eignet sich besonders für den erfindungsgemäßen Einsatz in einem PKW-Reifen mit einer Seitenwandhöhe von maximal 115 mm.

Die Wulstbereiche können zusätzlich verstärkt werden, um den Belastungen im Normalbetrieb aber auch den Belastungen im Pannenfall dauerhaft und gut standzuhalten. Dazu kann beispielsweise vorgesehen werden, zumindest eine zusätzliche Verstärkungslage einzubringen. Vorteilhaft ist es hierzu, zwischen den beiden Kernen bzw. Kernprofilen zumindest eine Wulstverstärkerlage mit Festigkeitsträgern aus textilen Festigkeitsträgern oder aus Stahlkorden einzubringen oder um den Kern oder den Kern und das Kernprofil eine Kernfahne zu legen.

In einer bevorzugten Ausführungsform ist an der axialen Oberfläche des Fahrzeugluftreifens eine Felgenschutzrippe angeordnet. Hierdurch kann die Belastung in der Biegezone zusätzlich verringert werden.

Zweckmäßig ist es, wenn der PKW-Reifen für einen Felgendurchmesser von mindestens 16 Zoll vorgesehen ist.

Zweckmäßig ist es auch, wenn die Festigkeitsträger der Karkasse aus Rayon oder Polyester gebildet sind. Zweckmäßig ist es weiter, wenn die Festigkeitsträger der Karkasse einen Winkel zwischen 88° und 92° mit der Reifenumfangsrichtung einschließen.

Vorteilhaft ist es, wenn der Fahrzeugluftreifen ein PKW-Reifen mit höherer Geschwindigkeitsanforderung ist. Hierunter fallen PKW-Reifen, die für Geschwindigkeiten von größer gleich 270 km/h geeignet sind. Bevorzugt handelt es sich hierbei um UHP PKW-Reifen. Für solche PKW-Reifen mit speziellen Anforderungen ist ein verringertes Reifengewicht sowie ein verbessertes Fahrverhalten, insbesondere ein vorteilhaftes Kurvenverhalten durch eine in axialer Richtung vergrößerte Bodenaufstandsfläche, besonders vorteilhaft.

Weitere Merkmale, Vorteile und Einzelheiten der Erfindung werden nun anhand der schematischen Zeichnung, die ein Ausführungsbeispiel darstellt, näher erläutert.

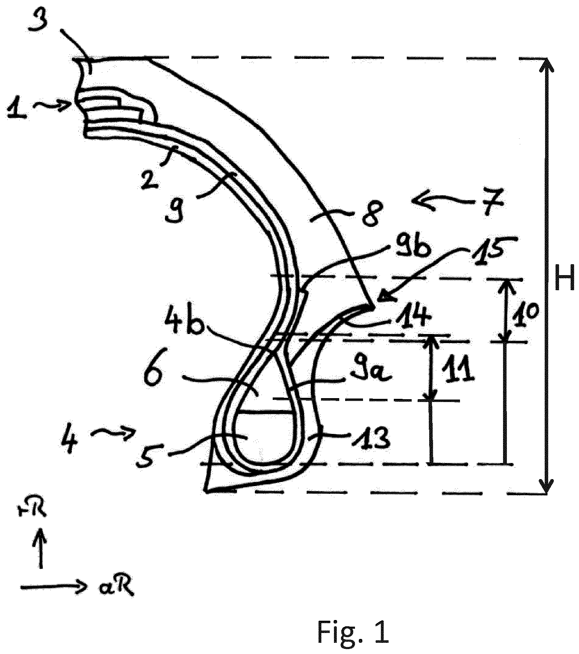

Die **Fig.1** zeigt schematisch einen Ausschnitt eines hälftigen Querschnitts durch einen PKW-Luftreifen in Radialbauart mit einer nominalen Seitenwandhöhe H von bis zu 115 mm. Der Reifen weist einen Gürtelverband 1 aus mehreren Gürtellagen, eine weitgehend luftundurchlässigen Innenschicht 2, einen profilierten Laufstreifen 3, Wulstbereiche 4 mit je einem Wulstkern 5, zwei Seitenwände 7 mit je einem Seitenwandstreifen 8 und eine einlagige Karkasse 9 mit textilen Festigkeitsträgern, welche innerhalb der Lage im Wesentlichen parallel zueinander angeordnet und in elastomerem Material eingebettet sind, auf. Die Karkasse 9 durchläuft den Reifen von Wulstbereich 4 zu Wulstbereich 4, umschlingt die Wulstbereiche 4 von axial innen nach axial außen und endet als Karkasshochschlag 9a, wobei das Ende des Karkasshochschlages 9a auf einer Höhe angeordnet ist, welche radial oberhalb des Wulstbereiches 4 liegt. Die Höhe des Endes des Karkasshochschlages 9b ist in einem ersten Höhenbereich 10 von 20 mm bis 30 mm angeordnet. Die Höhe des radialen äußeren Endes des Wulstbereichs 4b ist in einem zweiten Höhenbereich 11 von 13 mm bis 21 mm angeordnet. Die Höhenbereiche 10, 11 sind jeweils gemessen ab der Unterkante des Wulstkernes 5 in radialer Richtung rR. Das Ende des Karkasshochschlages 9b liegt somit radial zwischen dem radial äußeren Ende des Wulstbereichs 4b und der Hälfte der Seitenwandhöhe H.

Bei dem Reifen handelt es sich um einen UHP PKW-Reifen. Die Tragfähigkeitskennzahl des Reifens ist maximal 100.

Die Festigkeitsträger der Karkasse 9 schließen einen Winkel zwischen 88° und 92° mit der Reifenumfangsrichtung ein. Die Festigkeitsträger der Karkasse 9 sind Korde aus Rayon oder Polyester. Die Karkassgummierung weist einen Rückprallwert von 38 bis 50 % bei Raumtemperatur nach DIN53512, eine Shore A-Härte von 50 - 75 nach DIN ISO 7619-1:2012-02, eine Zugfestigkeit von 10 - 18 MPa nach DIN53479, eine Bruchdehnung von 300 % bis 650 %, gemessen gemäß DIN 53479, sowie eine Anzahl an Zyklen bis zum ersten Riss oder zur Risspropagation von 2 kC bis 1600 kC, gemessen gemäß DIN ISO 132, auf.

Der Wulstbereich 4 weist axial außerhalb der Karkasse 9 den Wulststreifen 13 sowie den Seitenwandstreifen 8 auf. Beide Bauteile 8,13 sind aus einer einzigen elastomeren Mischung gebildet. Der Bereich weist kein weiteres rein elastomeres Bauteil auf. Die beiden Bauteile 8, 13 grenzen - im Reifenquerschnitt betrachtet - an einer Grenzlinie 14 aneinander, welche axial außen auf einer Höhe von 22 mm bis 28 mm endet und axial innen auf einer Höhe von 0 mm bis 20 mm endet, jeweils gemessen ab der Unterkante des Wulstkernes 5 in radialer Richtung rR. Die Grenzlinie 14 ist somit als inverse Transitions-Linie ausgebildet. In einer anderen, nicht gezeigten, Ausführungsform ist die Grenzlinie 14 als Transitions-Linie ausgebildet. An der axial äußeren Oberfläche des Fahrzeugluftreifens ist eine Felgenschutzrippe 15 angeordnet.

### Bezugszeichenliste

- 1: Gürtelverband
- 2: Innenschicht
- 3: Laufstreifen
- 4: Wulstbereich
- 4b: radial äußeres Ende des Wulstbereichs
- 5: Wulstkern
- 6: Kernreiter
- 7: Seitenwand
- 8: Seitenwandstreifen
- 9: Karkasse
- 9a: Karkasshochschlag
- 9b: radial äußeres Ende des Karkasshochschlags
- 10: Höhenbereich
- 11: Höhenbereich
- 13: Wulststreifen
- 14: Grenzlinie
- 15: Felgenschutzrippe

- H: nominale Seitenwandhöhe
- rR: radiale Richtung
- aR: axiale Richtung

## Patentansprüche

1. Fahrzeugluftreifen für Personenkraftwagen in Radialbauart mit einem Gürtelverband (1) aus mehreren Gürtellagen, mit einer weitgehend luftundurchlässigen Innenschicht (2), mit einem profilierten Laufstreifen (3), mit Wulstbereichen (4) aufweisend je mindestens einen Wulstkern (5), mit Seitenwänden (7) aufweisend je mindestens einen Seitenwandstreifen (8) und mit einer einlagigen Karkasse (9) aufweisend textile Festigkeitsträger, welche innerhalb der Lage im Wesentlichen parallel zueinander angeordnet und in elastomerem Material eingebettet sind, wobei die Karkasse (9) den Reifen von Wulstbereich (4) zu Wulstbereich (4) durchläuft, die Wulstbereiche (4) von axial innen nach axial außen umschlingt und als Karkasshochschlag (9a) ausgeführt ist, wobei das Ende des Karkasshochschlages (9b) auf einer Höhe angeordnet ist, welche radial oberhalb des Wulstbereiches (4) liegt, wobei die Höhe des Endes des Karkasshochschlages (9b) in einem ersten Höhenbereich (10) von 18 mm bis 37 mm, bevorzugt von 20 mm bis 30 mm, angeordnet ist und dass die Höhe des radialen äußeren Endes des Wulstbereichs (4b) in einem zweiten Höhenbereich (11) von 13 mm bis 21 mm, bevorzugt von 15 mm bis 18 mm, angeordnet ist, jeweils gemessen ab der Unterkante des Wulstkernes (5) in radialer Richtung (rR), **dadurch gekennzeichnet, dass**
der Fahrzeugluftreifen eine nominale Seitenwandhöhe (H) von 115 mm oder weniger aufweist, und der Wulstbereich (4) axial außerhalb der Karkasse (9) genau zwei Bauteile (13, 8) - einen Wulststreifen (13) und einen Seitenwandstreifen (8) - aufweist, die aus elastomerem Material gebildet sind und jedes der Bauteile (8,13) zumindest im Wulstbereich (4) aus genau einer elastomeren Materialmischung gebildet ist, wobei der Seitenwandstreifen (8) und der Wulststreifen (13) in einer Grenzlinie (14) aneinander angrenzen, wobei die Grenzlinie (14) - im Reifenquerschnitt betrachtet -
• axial außen auf einer Höhe von 20 mm bis 30 mm, bevorzugt von 22 mm bis 28 mm, endet und
• axial innen auf einer Höhe von 0 mm bis 20 mm, bevorzugt von 12 mm bis 18 mm, endet,
• wobei die Höhen der axialen Enden gemessen sind ab der Unterkante des Wulstkernes (5) in radialer Richtung.

2. Fahrzeugluftreifen nach Anspruch 1, **dadurch gekennzeichnet, dass** die nominale Seitenwandhöhe (H) 106 mm oder weniger, bevorzugt 100 mm oder weniger, beträgt.

3. Fahrzeugluftreifen nach Anspruch 1 oder 2, **dadurch gekennzeichnet, dass** die Tragfähigkeitskennzahl des Reifens kleiner gleich 100 beträgt.

4. Fahrzeugluftreifen nach einem oder mehreren der Ansprüche 1 bis 3, **dadurch gekennzeichnet, dass** jeder Wulstbereich (4) nur aus einem Wulstkern (5) besteht, wobei der Wulstkern (5) vorzugsweise ein Hochkantkern mit einer radialen Erstreckung, die mindestens dreimal seiner axialen Erstreckung beträgt, ist.

5. Fahrzeugluftreifen nach einem oder mehreren der Ansprüche 1 bis 4, **dadurch gekennzeichnet, dass** das elastomere Material der Karkasse (9,9a)
• eine Shore-Härte (Shore-A) von 50 ShA bis 70 ShA, gemessen gemäß DIN ISO 7619-1:2012-02,
• einen Rückprallwert von 38 % bis 50 % bei Raumtemperatur nach DIN 53512,
• eine Zugfestigkeit von 10 MPa bis 18 MPa, gemessen gemäß DIN 53479,
• eine Bruchdehnung von 300 % bis 650 %, gemessen gemäß DIN 53479, sowie
• eine Anzahl an Zyklen bis zum ersten Riss oder zur Risspropagation von 2 kC bis 1600 kC, gemessen gemäß DIN ISO 132, aufweist.

6. Fahrzeugluftreifen nach einem oder mehreren der Ansprüche 1 bis 5, **dadurch gekennzeichnet, dass** der Wulstbereich (4) zumindest eine zusätzliche Festigkeitsträgerlage, bevorzugt zumindest eine Wulstverstärkerlage und / oder zumindest eine Kernfahne, aufweist.

7. Fahrzeugluftreifen nach einem oder mehreren der Ansprüche 1 bis 6, **dadurch gekennzeichnet, dass** an der axialen Oberfläche des Fahrzeugluftreifens eine Felgenschutzrippe (15) angeordnet ist.

8. Fahrzeugluftreifen nach einem oder mehreren der Ansprüche 1 bis 7, **dadurch gekennzeichnet, dass** der Fahrzeugluftreifen ein PKW-Reifen mit höherer Geschwindigkeitsanforderung, bevorzugt ein Ultra High Performance (UHP) PKW-Reifen, ist.

## Claims

1. Pneumatic vehicle tyre for passenger cars of a radial type of construction, with a belt assembly (1) comprising multiple belt plies, with a largely air-impermeable inner layer (2), with a profiled tread (3), with bead regions (4) each having at least one bead core (5), with sidewalls (7) each having at least one sidewall strip (8) and with a single-ply carcass (9) having textile reinforcing elements, which are arranged substantially parallel to one another within the ply and are embedded in elastomeric material, wherein the carcass (9) runs through the tyre from bead region (4) to bead region (4), wraps around the bead regions (4) from the axial inside to the axial outside and is configured as a carcass turn-up (9a), wherein the end of the carcass turn-up (9b) is arranged at a height that lies radially above the bead region (4), wherein the height of the end of the carcass turn-up (9b) is arranged in a first height region (10) from 18 mm to 37 mm, preferably from 20 mm to 30 mm, and in that the height of the radial outer end of the bead region (4b) is arranged in a second height region (11) from 13 mm to 21 mm, preferably from 15 mm to 18 mm, measured in each case from the lower edge of the bead core (5) in the radial direction (rR), **characterized in that**
the pneumatic vehicle tyre has a nominal sidewall height (H) of 115 mm or less, and the bead region (4) has axially outside the carcass (9) precisely two components (13, 8) - a bead strip (13) and a sidewall strip (8) - which are formed from an elastomeric material, and each of the components (8, 13) is formed at least in the bead region (4) from precisely one elastomeric material mixture, wherein the sidewall strip (8) and the bead strip (13) adjoin one another in a boundary line (14), wherein the boundary line (14) - considered in the cross section of the tyre -
• ends axially on the outside at a height of 20 mm to 30 mm, preferably of 22 mm to 28 mm, and
• ends axially on the inside at a height of 0 mm to 20 mm, preferably of 12 mm 18 mm,
• wherein the heights of the axial ends are measured from the lower edge of the bead core (5) in the radial direction.

2. Pneumatic vehicle tyre according to Claim 1, **characterized in that** the nominal sidewall height (H) is 106 mm or less, preferably 100 mm or less.

3. Pneumatic vehicle tyre according to Claim 1 or 2, **characterized in that** the load index of the tyre is less than or equal to 100.

4. Pneumatic vehicle tyre according to one or more of Claims 1 to 3, **characterized in that** each bead region (4) consists only of a bead core (5), wherein the bead core (5) is preferably a high-edge core with a radial extent that is at least three times its axial extent.

5. Pneumatic vehicle tyre according to one or more of Claims 1 to 4, **characterized in that** the elastomeric material of the carcass (9, 9a) has
• a Shore hardness (Shore A) of 50 ShA to 70 ShA, measured according to DIN ISO 7619-1:2012-02,
• a rebound value of 38% to 50% at room temperature in accordance with DIN 53512,
• a tensile strength of 10 MPa to 18 MPa, measured according to DIN 53479,
• an elongation at break of 300% to 650%, measured according to DIN 53479, and
• a number of cycles to initial cracking or crack propagation of 2 kC to 1600 kC, according to DIN ISO 132.

6. Pneumatic vehicle tyre according to one or more of Claims 1 to 5, **characterized in that** the bead region (4) has at least one additional reinforcing element ply, preferably at least one bead reinforcing ply and/or at least one filler strip.

7. Pneumatic vehicle tyre according to one or more of Claims 1 to 6, **characterized in that** a rim protection rib (15) is arranged on the axial surface of the pneumatic vehicle tyre.

8. Pneumatic vehicle tyre according to one or more of Claims 1 to 7, **characterized in that** the pneumatic vehicle tyre is a car tyre with a higher speed requirement, preferably an ultrahigh performance (UHP) car tyre.

## Revendications

1. Pneumatique de véhicule pour voitures particulières de type radial doté d'un ensemble de ceinture (1) composé de plusieurs nappes de ceinture, avec une couche intérieure largement imperméable à l'air (2), avec une bande de roulement profilée (3), avec des régions de talon (4) présentant chacune au moins une tringle de talon (5), avec des flancs (7) présentant chacun au moins une bande de flanc (8) et avec une carcasse en une nappe (9) présentant des éléments de résistance textiles, qui sont disposés à l'intérieur de la nappe essentiellement parallèlement l'un à l'autre et qui sont noyés dans la matière élastomère, dans lequel la carcasse (9) traverse le pneu d'une région de talon (4) à l'autre région de talon (4), entoure les régions de talon (4) du côté axialement intérieur au côté axialement extérieur et est réalisée sous forme de retournement de carcasse (9a), dans lequel l'extrémité (9b) du retournement de carcasse est disposée à une hauteur, qui est située radialement au-dessus de la région de talon (4), dans lequel la hauteur de l'extrémité (9b) du retournement de carcasse est disposée dans une première plage de hauteur (10) de 18 mm à 37 mm, de préférence de 20 mm à 30 mm, et en ce que la hauteur de l'extrémité radiale extérieure (4b) de la région de talon est disposée dans une seconde plage de hauteur (11) de 13 mm à 21 mm, de préférence de 15 mm à 18 mm, chaque fois mesurée à partir de l'arête inférieure de la tringle de talon (5) en direction radiale (rR), **caractérisé en ce que** le pneumatique de véhicule présente une hauteur de flanc nominale (H) de 115 mm ou moins et la région de talon (4) présente axialement à l'extérieur de la carcasse (9) exactement deux composants (13, 8) - une bande de talon (13) et une bande de flanc (8) - qui sont formés en matière élastomère et chacun des composants (8, 13) est formé au moins dans la région de talon (4) en exactement un mélange de matière élastomère, dans lequel la bande de flanc (8) et la bande de talon (13) sont adjacentes l'une à l'autre à une ligne de limitation (14), dans lequel la ligne de limitation (14) - considérée en section transversale du pneumatique -
• se termine axialement à l'extérieur à une hauteur de 20 mm à 30 mm, de préférence de 22 mm à 28 mm, et
• se termine axialement à l'intérieur à une hauteur de 0 mm à 20 mm, de préférence de 12 mm à 18 mm,
• dans lequel les hauteurs des extrémités axiales sont mesurées à partir de l'arête inférieure de la tringle de talon (5) en direction radiale.

2. Pneumatique de véhicule selon la revendication 1, **caractérisé en ce que** la hauteur de flanc nominale (H) vaut 106 mm ou moins, de préférence 100 mm ou moins.

3. Pneumatique de véhicule selon une revendication 1 ou 2, **caractérisé en ce que** l'indice de capacité de charge du pneu est inférieur ou égal à 100.

4. Pneumatique de véhicule selon une ou plusieurs des revendications 1 à 3, **caractérisé en ce que** chaque région de talon (4) ne se compose que d'une tringle de talon (5), dans lequel la tringle de talon (5) est de préférence une tringle disposée sur chant avec une extension radiale, qui vaut au moins trois fois son extension axiale.

5. Pneumatique de véhicule selon une ou plusieurs des revendications 1 à 4, **caractérisé en ce que** la matière élastomère de la carcasse (9, 9a) présente
• une dureté Shore (Shore A) de 50 ShA à 70 ShA, mesurée selon la norme DIN ISO 7619-1:2012-02,
• un indice de rebondissement de 38 % à 50 % à la température ambiante selon la norme DIN 53512,
• une résistance à la traction de 10 MPa à 18 MPa, mesurée selon la norme DIN 53479,
• un allongement à la rupture de 300 % à 650 %, mesuré selon la norme DIN 53479, ainsi que
• un nombre de cycles jusqu'à la première fissure ou la propagation de fissures de 2 kC à 1600 kC, mesuré selon la norme DIN ISO 132.

6. Pneumatique de véhicule selon une ou plusieurs des revendications 1 à 5, **caractérisé en ce que** la région de talon (4) présente au moins une couche supplémentaire d'éléments de résistance, de préférence au moins une couche de renfort de talon et/ou au moins un bourrage de talon.

7. Pneumatique de véhicule selon une ou plusieurs des revendications 1 à 6, **caractérisé en ce qu'**une nervure de protection de jante (15) est disposée sur la surface axiale du pneumatique de véhicule.

8. Pneumatique de véhicule selon une ou plusieurs des revendications 1 à 7, **caractérisé en ce que** le pneumatique de véhicule est un pneu de voiture particulière avec une exigence de vitesse accrue, de préférence un pneu de voiture particulière à Ultra Hautes Performances (UHP).
